(19) Europäisches Patentamt

European Patent Office

Office européen des brevets

(11) Veröffentlichungsnummer: **0 264 860 B1**

(12) **EUROPÄISCHE PATENTSCHRIFT**

(45) Veröffentlichungstag der Patentschrift: **30.09.92**

(21) Anmeldenummer: **87115189.0**

(22) Anmeldetag: **16.10.87**

(51) Int. Cl.⁵: **G01S 17/87**, G01S 17/88

(54) **Vorrichtung zum Erkennen von Hindernissen für Kraftfahrzeuge.**

(30) Priorität: **17.10.86 DE 3635396**

(43) Veröffentlichungstag der Anmeldung:
**27.04.88 Patentblatt 88/17**

(45) Bekanntmachung des Hinweises auf die
Patenterteilung:
**30.09.92 Patentblatt 92/40**

(84) Benannte Vertragsstaaten:
**DE FR GB IT SE**

(56) Entgegenhaltungen:
**DE-A- 2 934 773**
**GB-A- 2 131 642**
**US-A- 3 716 833**

**PATENT ABSTRACTS OF JAPAN, Band 10,**
**Nr. 274 (P-498)[2330], 18. September 1986;&**
**JP-A-61 96 484**

**PATENT ABSTRACTS OF JAPAN, Band 6, Nr.**
**100 (P-121) [978], 9. Juni 1982;& JP-A-57 34**
**476**

**TECHNICAL NOTES, Juni 1986, A-K, Seite**
**442, Pasadena, California, US;**
**"Focal-plane-array optical proximity sen-**
**sors"**

(73) Patentinhaber: **Bayerische Motoren Werke Ak-**
**tiengesellschaft**
**Patentabteilung AJ-30 Postfach 40 02 40 Pe-**
**tuelring 130**
**W-8000 München 40(DE)**

(72) Erfinder: **Weishaupt, Walter**
**Am Wismat 28**
**W-8000 München 50(DE)**
Erfinder: **Mehnert, Walter**
**Grillparzerstrasse 6**
**W-8012 Ottobrunn(DE)**

(74) Vertreter: **Bullwein, Fritz**
**Bayerische Motoren Werke Aktiengesell-**
**schaft Postfach 40 02 40 Petuelring 130 AJ-**
**33**
**W-8000 München 40(DE)**

**Beschreibung**

Die Erfindung bezieht sich auf ein Verfahren gemäß dem Oberbegriff des Hauptanspruchs.

Derartige Verfahren sind allgemein bekannt, siche z. B GB-A-2 131 642. Als elektromagnetische Strahlung dient, z. B. sichtbares Licht, das von einer Laser-Lichtquelle ausgesandt wird. Daneben kann die Strahlung auch unsichtbar sein und z. B. von einer Quelle für infrarotes Licht stammen.

Bei derartigen Verfahren ist es erwünscht, einen möglichst großen Untersuchungsbereich zu erfassen. Dies kann am besten in der Weise geschehen, daß Sender und Empfänger auf demselben Weg ihre Strahlung weiterleiten. Im Idealfall können z. B. im Falle eines Lasers die Ausgangs- bzw. Eingangsoptiken zusammenfallen. Näherungsweise können sie auch unmittelbar nebeneinander angeordnet sein.

Unter besonderen atmosphärischen Bedingungen treten bei einer derartigen Anordnung aber Probleme auf. Hierunter ist der Fall von Wassertröpfchen zu verstehen, die in großer Anzahl zwischen einem zu detektierenden Hindernis und dem Kraftfahrzeug auftreten. Typischerweise ist dies bei Nebel oder starken Regenfällen der Fall. Diese Wassertröpfchen reflektieren dann die elektromagnetische Strahlung und erschweren oder verhindern das Erkennen eines Hindernisses.

Der Erfindung liegt die Aufgabe zugrunde, ein Verfahren der eingangs genannten Art zu schaffen, die im Falle von atmosphärischen Störungen, wie Nebel oder starkem Regen, dennoch ein Hindernis erkennen lassen.

Die Erfindung löst diese Aufgabe durch die kennzeichnenden Merkmale des Hauptanspruchs.

Durch die Vergrößerung der Entfernung des Untersuchungsbereichs kommt die Reflexion an den Wasserströpfchen im Nahbereich nicht mehr zum Tragen. Diese Reflexion entspricht in etwa der Reflexion an einem Hindernis, das sich relativ nahe am Kraftfahrzeug befindet. Hinzu kommt ein weiterer Umstand. Die größere Entfernung des Untersuchungsbereichs geht in der Regel einher mit einer Verkleinerung dieses Bereichs. Damit aber wird die Zahl der zu einer störenden Reflexion fähigen bzw. führenden Wassertröpfchen ebenfalls entsprechend verkleinert. Die Verkleinerung der Zahl der Nebeltröpfchen führt nunmehr zu einer Verringerung der störenden Reflexionen, die wesentlich stärker als die Verringerung der Zahl der Nebeltröpfchen ist. Dies ist darauf zurückzuführen, daß die elektromagnetische Strahlung an diesen Wassertröpfchen auch mehrmals gestreut wird.

Verbesserungen der Erfindung sind in den weiteren Patentansprüchen beschrieben. Mit den Maßnahmen nach Patentanspruch 2 läßt sich eine erhebliche Verbesserung bei der Erkennung von Hindernissen sowohl in der Nähe des Kraftfahrzeugs als auch in der Ferne erzielen. Da die beiden Nahbereiche in der Regel nicht deckungsgleich sind, lassen sich damit Hindernisse in diesem Bereich zumindest annähernd lückenlos erkennen. Dasselbe gilt für den Fernbereich. Hier ergibt sich eine deutliche Verbesserung sowohl der Reichweite als auch der Breite des Untersuchungsbereichs.

Die Maßnahme nach den Ansprüchen 3 und 4 ermöglichen ein selbsttätiges Umschalten auf die kreuzweise Schaltung von Sendern und Empfängern im Gegensatz zu einer ebenfalls möglichen manuellen Umschaltung. Die Merkmale beider Ansprüche liefern sichere Indizien für die Notwendigkeit dieser Umschaltung.

In der Zeichnung ist ein Ausführungsbeispiel der Erfindung dargestellt. Es zeigt

Fig. 1 mit den beiden Teilen a und b Darstellungen zur Erläuterung des Prinzips der Erfindung und

Fig. 2 ein Ausführungsbeispiel der Erfindung.

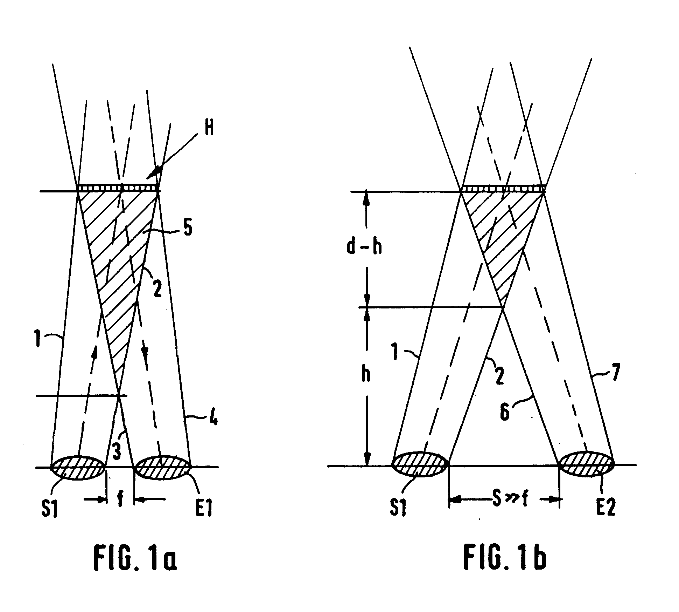

Im linken Teil von Figur 1 ist mit S 1 ein Sender und mit E 1 ein Empfänger für elektromagnetische Strahlungen in Form von sichtbarem Licht gezeigt. Der Sender streut dieses Licht aus einer Laser-Lichtquelle aus (nicht gezeigt). Der Sender S 1 und der Empfänger E 1 sind nahe benachbart angeordnet. Aus Gründen der Deutlichkeit ist ein kleiner Abstand mit f eingezeichnet.

Das vom Sender S 1 ausgesandte Licht wird in einen kegelförmigen Sendebereich ausgesandt, dessen Begrenzungslinien mit 1 und 2 bezeichnet sind. Der Empfänger E 1 empfängt Strahlung aus einem kegelförmigen Empfangsbereich, dessen in der Betrachtungsebene gelegene Begrenzungslinien mit 3 und 4 bezeichnet sind. Der Betrachtungsbereich verläuft vor einem nicht dargestellten Kraftfahrzeug und schließt die nicht dargestellte Fahrbahn für das Kraftfahrzeug ein.

Die Überlappung von Sende- und Empfangsbereich ergibt einen nahe beim Kraftfahrzeug liegenden Untersuchungsbereich 5, dessen annähernd rautenförmige Begrenzungslinien durch die Linien 1 bis 4 gebildet sind. Ein in diesem Untersuchungsbereich gelegenes Hindernis H reflektiert die vom Sender S 1 ausgehende Strahlung zum Empfänger E 1 und kann damit erkannt werden.

Befinden sich zwischen einem Hindernis und dem Sender S 1 bzw. dem Empfänger E 1 eine Vielzahl von kleinen Wassertröpfchen, wie sie beispielsweise im Falle von Nebel vorliegen, so wird die Strahlung des Senders S 1 an diesen Wassertröpfchen reflektiert und führt zu einer starken Streuung. Dies kann soweit führen, daß das Hindernis nicht mehr erkannt wird. Die Rückstreuung der Strahlung an diesen Wassertröpfchen ist vergleichbar mit der Reflexion an einem Hindernis, das relativ nahe am Kraftfahrzeug und im Untersuchungsbereich liegt. Von einer dem Empfänger E 1 nachgeschalteten Auswerteelektronik kann dabei nicht unterschieden werden, ob diese Reflexion tatsächlich von einem Hindernis oder an den Wassertröpfchen erfolgt.

Die erfinderische Überlegung besteht im wesentlichen darin, den Untersuchungsbereich dann in größerem Abstand vor dem Kraftfahrzeug anzuordnen. Die Vergrößerung des Untersuchungsbereichs vor dem Kraftfahrzeug soll mindestens soweit sein, daß eine fiktives, durch Reflexion der Strahlungen an den Wassertröpfchen simuliertes Hindernis in unmittelbarer Nähe des Kraftfahrzeugs nicht erkannt wird. Hierzu wird der Sender S 1 mit einem Empfänger E 2 zusammengeschaltet, die wesentlich weiter voneinander entfernt (Abstand s f) angeordnet sind und deren Untersuchungsbereich die annähernd rautenförmige und durch die Begrenzungslinien 1 und 2 des Senders S 1 und 6 und 7 des Empfängers E 2 beschriebene Form besitzt. Bei einem derart angeordneten Untersuchungsbereich tritt eine störende Reflexion an nahen Wassertröpfchen nicht mehr auf. Hinzu kommt, daß die Gesamtzahl der Wassertröpfchen im Untersuchungsbereich in der Regel stark verringert und damit die Streuung an den Wassertröpfchen ebenfalls stark verringert ist. Dabei ist, wie bereits ausgeführt, die Verringerung der Reflexion an den Wassertröpfchen stärker als die Verringerung der Zahl der Wassertröpfchen.

Der Sender S 1 ist mit beiden Empfängern E 1 und E 2 in der Weise zusammengeschaltet, daß unter normalen atmosphärischen Bedingungen der Sender S 1 mit dem Empfänger E 1 zusammenarbeitet. Sind nun Wassertröpfchen in größerer Zahl im Untersuchungsbereich vorhanden, so wird der Empfänger E 2 mit dem Sender S 1 zusammengeschaltet. Der Untersuchungsbereich wird damit in größerer Entfernung vom Kraftfahrzeug gelegt. Dabei tritt die Reflexion an den Wassertröpfchen nicht mehr störend in Erscheinung.

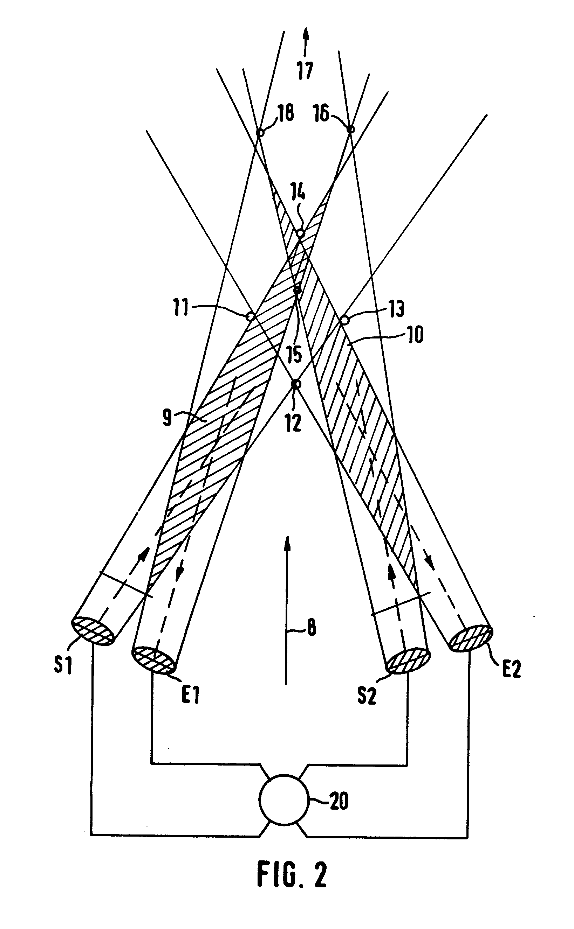

Beim Ausführungsbeispiel von Figur 2 sind zwei Paare von Sendern und Empfängern S 1 und E 1 bzw. S 2 und E 2 vorhanden. Diese Paare sitzen beispielsweise an den beiden Vorderseiten des Kraftfahrzeugs, z. B. neben den Scheinwerfern bzw. integriert hinter der Windschutzscheibe in dem gewischten Bereich. Aus Gründen der Übersichtlichkeit sind die beiden Sender-Empfängerpaare schräg zur Längsachse (Pfeil 8 des Kraftfahrzeugs) angeordnet.

Unter normalen Bedingungen arbeiten die Paare S 1 und E 1 bzw. S 2 und E 2 jeweils zusammen. Sie besitzen beide Untersuchungsbereiche in unmittelbarer Nähe des Kraftfahrzeugs, die schraffiert eingezeichnet sind.

Die beiden Paare werden aus Gründen der Eindeutigkeit des empfangenen Signals abwechselnd betrieben.

Bei Nebel oder starkem Regen kommt est nun, wie im Teil a in Figur 1 dargestellt, zu einer starken Reflexion an nahen Wassertröpfchen. Um dennoch sicher ein Hindernis erkennen zu können, wird nunmehr der Sender S 1 mit dem Empfänger E 2 und alternativ bzw. anschließend der Sender S 2 mit dem Empfänger E 1 zusammengeschaltet. Sender S 1 und Empfänger E 2 besitzen einen Untersuchungsbereich, dessen Eckpunkte mit dem Ziffern 11 bis 14 bezeichnet sind. Die Eckpunkte des Untersuchungsbereichs für den Sender S 2 und den Empfänger E 1 sind mit den Zahlen 15 bis 18 bezeichnet. Deutlich ist zu erkennen, daß diese beiden Untersuchungsbereiche in wesentlich größerem Abstand vor dem Kraftfahrzeug liegen und daher eine störende Reflexion an nahe gelegenen Wassertröpfchen praktisch nicht mehr auftreten kann.

Ein in den Untersuchungsbereichen liegendes Hindernis wird auch bei nicht gegebener optischer Erkennbarkeit für den Fahrzeugbenutzer sicher erkannt.

Das Umschalten des Senders S 1 vom Empfänger E 1 auf den Empfänger E 2 bzw. des Senders S 2 von Empfänger E 2 auf den Empfänger E 1 kann auf unterschiedliche Weise vorgenommen werden. Eine Möglichkeit ist, diese Umschaltung in Zusammenhang mit dem Einschalten eines Nebellichts vorzunehmen. Alternativ dazu kann diese Umschaltung auch aufgrund des bei Nebel aus dem Nahbereich reflektierten, ein Hindernis simulierende Strahlung erfolgen. Hierzu dient ein Schalter 20, der in Abhängigkeit von der Betätigung eines nicht dargestellten Nebellichtschalters oder in Abhängigkeit von der mit den Empfängern E 1 bzw. E 2 bei wirksamem Sender S 1 bzw. Sender S 2 erhaltenen Signal die gewünschte Schaltung vornimmt.

## Patentansprüche

1. Verfahren zum Erkennen von Hindernissen für Kraftfahrzeuge, mit einem Sender und einem ersten Empfänger für elektromagnetische Strahlung, die am Kraftfahrzeug angeordnet und auf einen ersten Untersuchungsbereich (Nahbereich) ausgerichtet sind, der in unmittelbarer Nähe am Kraftfahrzeug beginnt und mit einem zweiten am Kraftfahrzeug angeordneten Empfänger (E2), der zusammen mit dem Sender (S1) auf einen zweiten Untersuchungsbereich (Fernbereich) ausgerichtet ist, der im wesentlich größerem Abstand vom Kraftfahrzeug als der erste Untersuchungsbereich beginnt, dadurch gekennzeichnet, daß der zweite Empfänger (E2) anstelle des ersten Empfängers (E1) aktiviert wird, wenn die Erkennung von Hindernissen im ersten Untersuchungsbereich aufgrund atmosphärischer Bedingungen nicht mehr ausreichend möglich ist.

2. Verfahren nach Anspruch 1, dadurch gekennzeichnet, daß der zweite Empfänger (E2) mit einem zweiten Sender (S2) zusammen ebenfalls auf einen weiteren Nahbereich und der zweite Sender (S2) mit dem ersten Empfänger (E1) auf einen weiteren Fernbereich ausgerichtet wird und die Sender/Empfänger abwechselnd kreuzweise zusammengeschaltet werden.

3. Verfahren nach Anspruch 2, dadurch gekennzeichnet, daß die kreuzweise Zusammenschaltung zusammen mit der Einschaltung eines Nebellichts erfolgt.

4. Verfahren nach Anspruch 2 und 3, dadurch gekennzeichnet, daß die kreuzweise Zusammenschaltung in Abhängigkeit von der Intensität der aus dem Nahbereich reflektierten Strahlung erfolgt.

## Claims

1. A method of detecting obstacles for motor vehicles, comprising a transmitter and a first receiver for electromagnetic radiation which are arranged on the motor vehicle and which are aligned on a first investigation range (close range) beginning in the immediate vicinity on the motor vehicle and aligned with a second receiver (E2) arranged on the motor vehicle, which together with the transmitter (S1) is aligned to a second investigation range (distant range) beginning at a substantially greater distance from the motor vehicle than the first investigation range, characterised in that the second receiver (E2) is activated instead of the first receiver (E1) when the detection of obstacles in the first investigation range is no longer sufficiently possible owing to atmospheric conditions.

2. A method according to Claim 1, characterised in that the second receiver (E2), together with a second receiver (S2), is aligned likewise on a further close range, and the second transmitter (S2) with the first receiver (E1) is aligned on a further distant range, and the transmitter/receiver are interconnected crosswise in an alternating manner.

3. A method according to Claim 2, characterised in that the crosswise-interconnection takes place together with the switching on of a fog lamp.

4. A method according to Claim 2 and 3, characterised in that the crosswise interconnection takes place as a function of the intensity of the radiation reflected from the close range.

## Revendications

1. Procédé pour reconnaître des obstacles pour véhicules à moteur, avec un émetteur et un premier récepteur de rayonnement électromagnétique, qui sont disposés sur le véhicule à moteur et sont orientés sur une première zone d'examen (zone de proximité), qui commence à proximité immédiate du véhicule à moteur et avec un deuxième récepteur (E2) disposé sur le véhicule à moteur, qui est orienté ainsi que l'émetteur (S1) sur une deuxième zone d'examen (zone éloignée), qui commence essentiellement à une plus grande distance du véhicule à moteur que la première zone d'examens, procédé caractérisé en ce que le deuxième récepteur (E2) est activé au lieu du premier récepteur (E1), quand la détection d'obstacles n'est plus suffisamment possible dans la première zone d'examen du fait des conditions atmosphériques.

2. Procédé selon la revendication 1, caractérisé en ce que le deuxième récepteur (E2) est orienté en même temps qu'un deuxième émetteur (S2) également sur une autre zone de proximité et le deuxième émetteur (S2) est orienté avec le récepteur (E1) sur une autre zone éloignée et en ce que les émetteurs (récepteurs sont alternativement branchés ensemble de façon croisée).

3. Procédé selon la revendication 3 caractérisé en ce que le branchement croisé a lieu en même temps que le branchement d'une lumière antibrouillard.

4. Procédé selon les revendications 2 et 3, caractérisé en ce que le branchement croisé a lieu en fonction de l'intensité du rayonnement réfléchi à partir de la zone rapprochée.

FIG. 1a

FIG. 1b

FIG. 2